(19) Europäisches Patentamt
European Patent Office
Office européen des brevets

(11) **EP 2 391 686 B1**

(12) **EUROPÄISCHE PATENTSCHRIFT**

(45) Veröffentlichungstag und Bekanntmachung des Hinweises auf die Patenterteilung:
**31.10.2012   Patentblatt 2012/44**

(51) Int Cl.:
*C09J 7/02* (2006.01)    *C09J 7/04* (2006.01)
*B32B 27/12* (2006.01)

(21) Anmeldenummer: **10701494.6**

(22) Anmeldetag: **18.01.2010**

(86) Internationale Anmeldenummer:
**PCT/EP2010/050497**

(87) Internationale Veröffentlichungsnummer:
**WO 2010/086244 (05.08.2010 Gazette 2010/31)**

(54) **VERWENDUNG VON TRÄGER VERSTÄRKTEN HITZEAKTIVIERBAREN KLEBEMASSEN**

USE OF CARRIER REINFORCED HEAT ACTIVATED ADHESIVE COMPOUNDS

UTILISATION DE MATIÈRES ADHÉSIVES À ACTIVATION THERMIQUE RENFORCÉES PAR UN SUPPORT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.01.2009   DE 102009006935**

(43) Veröffentlichungstag der Anmeldung:
**07.12.2011   Patentblatt 2011/49**

(73) Patentinhaber: **TESA SE**
**20253 Hamburg (DE)**

(72) Erfinder:
• **HUSEMANN, Marc**
**22559 Hamburg (DE)**
• **KOOP, Matthias**
**22848 Norderstedt (DE)**

(56) Entgegenhaltungen:
**DE-A1- 10 112 375    DE-A1- 19 931 214**
**GB-A- 2 108 425**

• **DATABASE WPI Week 197617 Thomson Scientific, London, GB; AN 1976-30907X XP002588174 & JP 51 028834 A (JAPAN VILENE CO LTD) 11. März 1976 (1976-03-11)**

**EP 2 391 686 B1**

## Beschreibung

Die Erfindung betrifft die Verwendung eine Klebefolie umfassend einen Vliesträger und zwei Schichten aus hitzeaktivierbaren Klebemassen, zur Verklebung von Metallteilen auf Kunststoff, Glas oder Metall, von Bauteilen elektronischer Geräte

Zur Verklebung von Metallteilen auf Kunststoffen, Gläsern oder Metallen werden üblicherweise doppelseitige Haftklebebänder eingesetzt. Die hiermit erreichbaren Klebkräfte genügen in vielen Fällen einer Fixierung und Befestigung der Metallbauteile auf den verschiedenen Untergründen. Als Metalle werden beispielsweise Aluminium, Magnesium, Stahl, Edelstahl sowie Stahl mit Chromierungen eingesetzt. Als Kunststoffe werden zum Beispiel Acrylnitril-Butadien-Styrol-Copolymere (ABS), Polycarbonate (PC), Polypropylenadipate (PPA), Polyamide (PA), Polymethylmethacrylat (PMMA), Polyvinylchlorid (PVC) oder Blends basierend auf diesen Kunststoffen verklebt.

Insbesondere für portable Konsumgüterelektronikartikel steigen jedoch stetig die Anforderungen. Zum einen werden diese Artikel immer kleiner gestaltet, so dass damit auch die Verklebungsflächen immer kleiner werden. Zum anderen werden an die Verklebung vermehrt zusätzliche Anforderungen gestellt, da portable Geräte in einem relativ großen Temperaturbereich eingesetzt werden und zudem mechanischen Belastungen, etwa durch Stöße oder Stürze, standhalten müssen.

Diese Vorraussetzungen sind besonders problematisch für Metall-Metall-Verklebungen und Metallverklebungen auf Kunststoffen. Kunststoff kann bei einem Sturz einen Teil der Energie absorbieren, während steife Metallteile nur wenig Energie dissipieren können. Zudem geht der Trend zu immer härteren und/oder mit Glasfasern verstärkten Kunststoffen, die zwar stabiler sind, aber ein geringeres Schockabsorptionsvermögen aufweisen; gleiches gilt für Gläser. In diesen Fällen muss das Klebeband einen Großteil der eingebrachten Energie absorbieren.

Des Weiteren sind insbesondere bei der Verklebung unterschiedlicher Materialien miteinander die unterschiedlichen thermischen Ausdehnungskoeffizienten ein Problem. So können bei raschen Temperaturwechseln Spannungen zwischen den Bauteilen auftreten. Eine Möglichkeit zur Verbesserung der Eigenschaften der geräte in Hinblick auf die vorgenannten Probleme besteht in dem Einsatz hitzeaktivierbarer Folien zur Verklebung.

Hitzeaktivierbare Klebemassen können grundsätzlich in zwei Kategorien unterschieden werden:

    a) thermoplastische hitzeaktivierbare Klebemassen, insbesondere Folien
    b) reaktive hitzeaktivierbare Klebemassen, insbesondere Folien

Der Begriff "hitzeaktivierbare Klebemasse" (in der Literatur auch als "wärmeaktivierbare Klebemasse" bezeichnet) bezeichnet Klebemassen, die durch Zufuhr thermischer Energie und optional, aber üblicherweise Druckeinwirkung aktiviert werden. Die Applikation kann insbesondere aus der Schmelze oder bei geringeren Temperaturen in Folienform erfolgen, wobei die Fixierung (Haftung) der Folie auf dem Substrat bei Erwärmung und gegebenenfalls unter Druck erfolgt. Bei der Abkühlung wird die Verklebung bewirkt, wobei insbesondere zwischen zwei Systemen zu unterscheiden ist: Thermoplastische hitzeaktivierbare Systeme (Schmelzklebstoffe) binden beim Abkühlen physikalisch ab (in der Regel reversibel), während hitzeaktivierbare Elastomer/Reaktivkomponenten-Systeme chemisch abbinden (in der Regel irreversibel).

Durch Zugabe von Reaktivkomponenten zu thermoplastischen hitzeaktivierbaren Systemen kann auch hier eine chemische Abbindung bewirkt werden, die auch zusätzlich zur physikalischen Abbindung erfolgen kann.

Hitzeaktivierbare Klebemassen werden häufig in Folienform zur Verfügung gestellt, die bei Raumtemperatur nichtklebrig sind (aufgrund der mehr oder weniger festen Eigenschaften der hitzeaktivierbaren Klebemassen bei Raumtemperatur sind diese in der Regel als trägerhaltige als auch als trägerlose Systeme gut konfektionierbar). Hierdurch kann die Klebemasse bereits vor der Verklebung an die Form der Verklebungsstelle angepasst werden (zum Beispiel durch die Bereitstellung von Folien-Stanzlingen, die der Form der Verklebungsstelle entsprechen. Durch Zufuhr thermischer Energie und ggf. zusätzliche Druckeinwirkung wird die Verklebung wie vorstehend dargestellt bewirkt.

Klebefoliensysteme auf Basis hitzeaktivierbarer Klebemassen, die gemäß des Standes der Technik für diese Anwendungen eingesetzt werden, weisen einige Nachteile auf. Um eine hohe Schockfestigkeit zu erreichen (für den Fall, dass das Mobilfunktelefon auf den Boden fällt), werden relativ weiche und elastische Thermoplasten zur Verklebung eingesetzt. Durch die Weichheit und Elastizität lassen sich diese thermoplastischen Folien relativ schlecht stanzen.

Ein weiterer Nachteil der Thermoplaste zeigt sich ebenfalls im Heißverklebungsprozess. Da die Viskosität durch die Einwirkung von Wärmeenergie stark abnimmt, kommt es während des Verklebungsprozesses unter Druck zu einem unerwünschten Ausquetschen des plastifizierten Materials aus der Klebefuge. Dies geht meist mit einer Dickenabnahme und Verformung der Folie einher.

Somit besteht der Bedarf für ein - bevorzugt thermoplastisch - hitzeaktivierbares Klebesystem, das gut applizierbar ist, bei der Anwendung auch unter Druckeinfluss kein oder nur ein geringes Ausquetschverhalten aufweist sowie im Verklebungszustand eine sehr gute Schockabsorption und einen mechanischen Spannungsausgleich gewährleistet. Die Aufgabe der vorliegenden Erfindung besteht darin, ein derartiges System anzubieten.

Die Aufgabe wird durch eine Klebefolie, umfassend einen Vliesträger und zwei auf den beiden Seiten des Vliesträgers angeordneten Schichten aus hitzeaktivierbaren Klebemassen gelöst, die sich dadurch auszeichnet, dass beide Klebemassen derart in den Vliesträger eingedrungen sind, dass insgesamt zwischen 20 % und 92 % des Faserzwischenvolumens des Vliesträgers im Klebfolienverbund mit der Klebemasse durchtränkt sind (Durchtränkungsgrad zwischen 20 % und 92 %), mit der Maßgabe, dass die auf den beiden Seiten des Fließträgers eingedrungenen Klebemassen jeweils mindestens 10 % des Faserzwischenvolumens des Fließträgers im Klebfolienverbund ausmachen.

Das Faserzwischenvolumen des Vliesträgers ist das Gesamtvolumen des Vliesträgers (getränkte und nicht getränkte Bereiche) im Klebefolienverbund abzüglich des Volumens der Fliesfasern.

Als Klebefolienverbund wird der Verbund aus dem Vliesträger und den zwei hitzeaktivierbaren Klebemassenschichten bezeichnet, und zwar, sofern nicht anderes angegeben ist, im nicht verklebten Zustand (also im Darreichungszustand; nach der Anwendung verringert sich sowohl die Dicke als auch das Volumen des Klebeverbundes durch das Zusammenpressen der Substrate).

Das Volumen der in den Fliesträger eingedrungenen Klebmasse beträgt erfindungsgemäß mindestens 20 %, bevorzugt mindestens 40 %, noch bevorzugter mindestens 50 %, und maximal 92 %, bevorzugt maximal 80 % des Faserzwischenvolumens des Vliesträgers in der Klebefolie.

Das Volumen des nicht mit Klebemassen getränkten Bereichs des Vliesträgers beträgt entsprechend 8 % bis 80 %, bevorzugt 20 bis 60 % des Faserzwischenvolumens des Vliesträgers im Klebefolienverbund.

Erfindungsgemäß beträgt das Volumen der auf den Seiten des Fließträgers eingedrungenen Klebemassen jeweils mindestens 10 % des Faserzwischenvolumens des Trägermaterials, mehr bevorzugt mindestens 20 %. Je mehr Klebemasse an der Trägeroberflächen eingedrungen ist, desto besser sind die Klebemassenschichten auf dem Träger verankert.

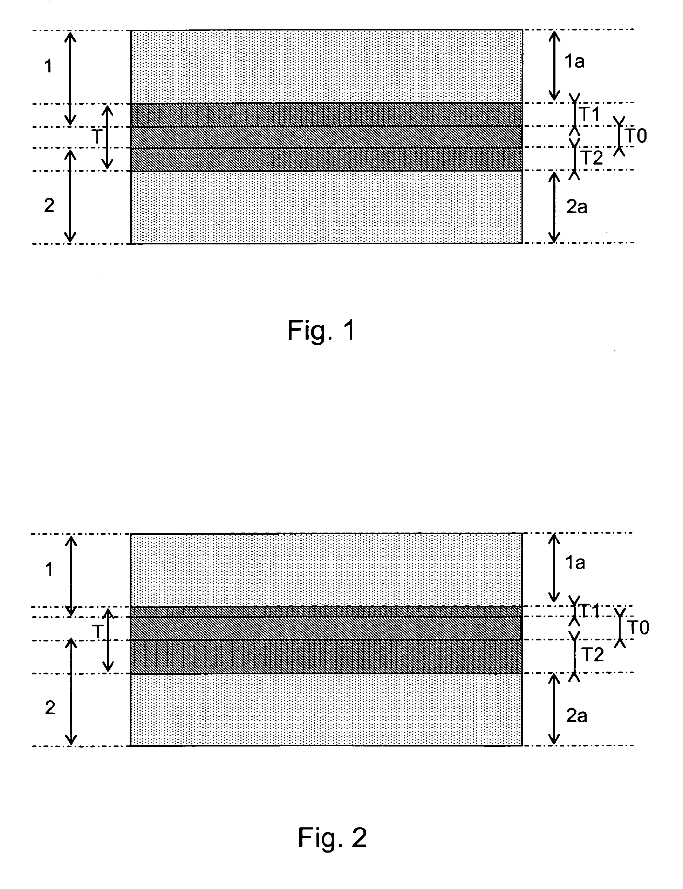

Anhand Figur 1 und 2 ist das erfindungsgemäße Prinzip des Gegenstands der Erfindung schematisch dargestellt, ohne sich durch den dort dargestellt Produktaufbau unnötig beschränken zu wollen.

Die Klebefolie umfasst einen Vliesträger T und zwei Schichten hitzeaktivierbarer Klebemassen 1 und 2, die die Oberflächen der hitzeaktivierbaren Klebefolie bilden. Beide Klebemassenschichten 1 und 2 sind an der Trägeroberfläche in den Vliesträger T eingedrungen, so dass sich zwei klebmassengetränkte Bereiche T1 und T2 des Trägers T ergeben (im folgenden auch als Eindringbereiche T1 und T2 bezeichnet ; T1 bezeichnet den mit der Klebemasse 1 und T2 den mit der Klebemasse 2 getränkten Trägerbereich). Zwischen den getränkten Trägerbereichen T1 und T2 soll erfindungsgemäß ein Bereich T0 verbleiben, der nicht mit Klebemasse getränkt ist.

Auf der Außenseite der Klebefolie verbleiben zwei außerhalb des Trägermaterials liegende Klebemassenschichten 1a und 2a.

In der Realität wird an den Grenzflächen zwischen dem Eindringbereich T1 und dem nicht getränkten Bereich T0 sowie zwischen dem Eindringbereich T2 und dem nicht getränkten Bereich T0 ein mehr oder weniger starker Übergang von vollständig getränktem Trägermaterial zu nicht getränktem Trägermaterial auftreten. Zudem wird die Grenzfläche nur mehr oder weniger planar sein, was unter anderem auf Verdichtungsschwankungen der Fasern des Vliesmaterials zurückzuführen ist. Der tatsächliche Verlauf der Grenzflächen hängt unter anderem von der Art der Klebemassenaufbringung auf den Träger und den Bedingungen hierbei ab. Die vorstehend genannten Prozentangaben zu den Eindringbereichen sind als mit einem derartigen Fehler behaftet zu verstehen.

Erfindungsgemäß bevorzugt wird als idealisierte Ausführungsform ein Klebeband angestrebt, bei dem die Eindringbereiche T1 und T2 vollständig und der nicht getränkte Trägerbereich T0 überhaupt nicht mit Klebemasse getränkt ist und bei dem die Grenzflächen besonders bevorzugt planar verlaufen.

In der Regel kann man von einer weitgehend homogenen Verteilung der Fasern im Vliesmaterial ausgehen. Gegenstand der Erfindung ist weiterhin eine Klebefolie umfassend einen Vliesträger und zwei auf beiden Seiten des Vliesträgers angeordneten Schichten aus hitzeaktivierbaren Klebemassen, wobei beider Klebemassen derart in den Vliesträger eingedrungen sind, dass insgesamt zwischen 20 und 92 %, bevorzugt zwischen 40 und 80 %, der Schichtdickes des Vliesträgers im Klebefolienverbund, mit der Klebemasse durchtränkt sind, mit der Maßgabe, dass auf beiden Seiten des Fließträgers jeweils mindestens 10 % der Vliesträgerdicke durchtränkt sind.

Die Prozentangaben beziehen sich hierbei auf planar-normierte Grenzflächen zwischen den getränkten Bereichen und dem nicht getränkten Bereich des Vliesträgers.

Innerhalb des Trägervlieses ist bevorzugt ein Streifen mit einer Dicke von 8 % bis 80 % der Schichtdicke des Trägervlieses, insbesondere von 20 % bis 60 % der Schichtdicke des Trägervlieses nicht mit einer der Klebemassen durchtränkt.

In einer bevorzugten Ausführung der Erfindung erfolgt die Durchtränkung des Trägervlieses T symmetrisch, d. h. die Eindringtiefe (Dicke der Eindringbereiche T1 und T2) auf der Ober- und Unterseite sind gleich. Eine derartige Ausführungsform ist schematisch und beispielhaft in Fig. 1 dargestellt.

Beispielsweise durch die Trägervliesstruktur und/oder die Verfahrensführung bei der Aufbringung der Klebemassen können Unterscheide bezüglich der Eindringtiefe entstehen. Eine weitere vorteilhafte Ausführungsform der Erfindung weist daher unterschiedlich dicke Eindringbereiche (T1, T2) auf. Fig. 2 zeigt schematisch eine derartige Ausführungsform der Erfindung.

Sofern nicht anders angegeben oder aus dem Sinnzusammenhang ersichtlich, beziehen sich alle Angaben zu der Klebefolie auf beide beschriebenen Ausführungsformen. Der Begriff Klebefolie soll im Rahmen dieser Schrift alle flächigen Gebilde wie beispielsweise auch Klebebänder umfassen, insbesondere also diejenigen bei denen die Längsrichtung und die Ausdehnung in Querrichtung zur Längsrichtung deutlich größer ist als die Dicke des Gebildes.

Der nicht mit Klebemasse getränkte Bereich T0 des Vliesträgers T stellt bevorzugt einen durchgängigen Bereich dar, besteht also nicht aus mehreren separierten Volumenbereichen.

Für die hitzeaktivierbaren Klebmassen können grundsätzlich sowohl thermoplastische hitzeaktivierbare Systeme als auch hitzeaktivierbare Elastomer/Reaktivkomponenten-Systeme eingesetzt werden. Beidseitig thermoplastische hitzeaktivierbare Systeme sind aber sehr bevorzugt, da sich diese Systeme für die beabsichtigten Einsatzgebiete der hitzeaktivierbaren Klebefolien besser eignen und insbesondere einen größeren Anwendungsbereich umfassen.

Es sind auch Systeme realisierbar, die auf einer Seite mit einer thermoplastischen hitzeaktivierbaren Klebemasse und auf der anderen Seite mit einer hitzeaktivierbaren Elastomer/Reaktivkomponenten-Klebemasse ausgerüstet sind.

Die hitzeaktivierbare Klebemasse 1 auf der einen Seite des Vliesträgers und die hitzeaktivierbare Klebemasse 2 sind in einer bevorzugten Ausführungsform der Erfindung gleich, können aber auch unabhängig voneinander gewählt werden. So können die Beschichtungen auf der anderen Seite des Vliesträgers können chemisch identisch, chemisch ähnlich (zum Beispiel gleiche chemische Basis, aber unterschiedliche mittlere Molekulargewichte und/oder Additive), aber auch chemisch unterschiedlich (zum Beispiel unterschiedliche chemische Basis) sein.

## Hitzeaktivierbare Thermoplasten

Sehr bevorzugt basieren die hitzeaktivierbaren Klebemassen der Klebefolie auf thermoplastischen Polymeren. Thermoplastische Zur Anwendung las hitzeaktivierbare Klebemasse sind diese Systeme im Stand der Technik geläufig. Für die Erfindung können prinzipiell alle amorphen und teilkristallinen Thermoplaste eingesetzt werden, die unter Hitzeaktivierung zur Verklebung von Metallteilen auf Kunststoffen, Metallteilen oder Gläsern geeignet sind.

In einer bevorzugten Vorgehensweise werden Thermoplaste mit einer Erweichungstemperatur von mindestens 85 °C und höchstens 150 °C eingesetzt. Der Masseauftrag der Thermoplasten beträgt bevorzugt zwischen 10 und 250 g/m$^2$, besonders bevorzugt zwischen 20 und 150 g/m$^2$. Die Werte beziehen sich auf jeweils eine Seite des beschichteten Trägervlies.

Geeignete thermoplastische Polymere als Basis für die hitzeaktivierbaren Klebemassen sind zum Beispiel und nicht abschließend Polyester, Copolyester, Polyamide, Copolyamide, thermoplastische Polyurethane und Polyolefine [zum Beispiel Polyethylen (kommerziell erhältliches Beispiel: Hostalen®, Hostalen Polyethylen GmbH), Polypropylen (kommerziell erhältliches Beispiel: Vestolen P®, DSM)].

Des Weiteren können auch Blends aus unterschiedlichen Thermoplasten, insbesondere aus den vorgenannten Polymeren, eingesetzt werden.

In einer weiteren Ausführungsform werden Poly-$\alpha$-olefine eingesetzt. Von der Firma Degussa sind unter dem Handelsnamen Vestoplast™ unterschiedliche hitzeaktivierbare Poly-$\alpha$-olefine kommerziell erhältlich.

In der einfachsten Variante besteht die Klebemasse nur aus der thermoplastischen Komponente. Vorteilhafte Weiterentwicklungen sind aber durch Additivierung mit weiteren Bestandteilen gekennzeichnet.

Zur Optimierung der klebtechnischen Eigenschaften und des Aktivierungsbereiches lassen sich optional Klebkraft-steigernde Harze oder Reaktivharze hinzusetzten. Der Anteil der Harze beträgt zwischen 2 und 30 Gew.-% bezogen auf den Thermoplasten bzw. den thermoplastischen Blend.

Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

In einer weiteren Ausführung werden dem Thermoplasten Reaktivharze hinzugegeben. Eine sehr bevorzugte Gruppe umfasst Epoxy-Harze. Das Molekulargewicht der Epoxy-Harze variiert von 100 g/mol bis zu maximal 10.000 g/mol für polymere Epoxy-Harze.

Die Epoxy-Harze umfassen zum Beispiel das Reaktionsprodukt aus Bisphenol A und Epichlorhydrin, das Reaktionsprodukt aus Phenol und Formaldehyd (Novolak Harze) und Epichlorhydrin, Glycidyl Ester, das Reaktionsprodukt aus Epichlorhydrin und p-Amino Phenol.

Bevorzugte kommerzielle Beispiele sind zum Beispiel Araldite™ 6010, CY-281™, ECN™ 1273, ECN™ 1280, MY 720, RD-2 von Ciba Geigy, DER™ 331, DER™ 732, DER™ 736, DEN™ 432, DEN™ 438, DEN™ 485 von Dow Chemical, Epon™ 812, 825, 826, 828, 830, 834, 836, 871, 872,1001, 1004, 1031 etc. von Shell Chemical und HPT™ 1071, HPTT™ 1079 ebenfalls von Shell Chemical.

Beispiele für kommerzielle aliphatische Epoxy-Harze sind zum Beispiel Vinylcyclohexandioxide, wie ERL-4206, ERL-4221, ERL 4201, ERL-4289 oder ERL-0400 von Union Carbide Corp.

Als Novolak-Harze können zum Beispiel eingesetzt werden, Epi-Rez™ 5132 von Celanese, ESCN-001 von Sumitomo Chemical, CY-281 von Ciba Geigy, DEN™ 431, DEN™ 438, Quatrex 5010 von Dow Chemical, RE 305S von Nippon Kayaku, Epiclon™ N673 von DaiNipon Ink Chemistry oder Epicote™ 152 von Shell Chemical.

Weiterhin lassen sich als Reaktivharze auch Melamin-Harze einsetzen, wie zum Beispiel Cymel™ 327 und 323 von Cytec.

Weiterhin lassen sich als Reaktivharze auch Terpenphenolharze, wie zum Beispiel NIREZ™ 2019 von Arizona Chemical einsetzen.

Weiterhin lassen sich als Reaktivharze auch Phenolharze, wie zum Beispiel YP 50 von Toto Kasei, PKHC von Union Carbide Corp. Und BKR 2620 von Showa Union Gosei Corp. einsetzen.

Weiterhin lassen sich als Reaktivharze auch Polyisocyanate, wie zum Beispiel Coronate™ L von Nippon Polyurethan Ind. , Desmodur™ N3300 oder Mondur™ 489 von Bayer einsetzen.

Weiterhin können optional Füllstoffe (zum Beispiel Fasern, Ruß, Zinkoxid, Titandioxid, Kreide, Voll- oder Hohlglaskugeln, Mikrokugeln aus anderen Materialien, Kieselsäure, Silikate), Pigmente, Farbstoffe, Keimbildner, Blähmittel, Compoundierungsmittel und/oder Alterungsschutzmittel, zum Beispiel in Form von primären und sekundären Antioxidantien oder in Form von Lichtschutzmitteln zugesetzt sein.

**Trägervlies**

Als Trägervlies werden Flächengebilde aus einzelnen Fasern eingesetzt. Dabei können alle nach der Norm DIN EN 29092 definierten Vliese eingesetzt werden. Das Vlies besteht aus lose zusammengelegten Fasern, welche noch nicht miteinander verbunden sind. Die Festigkeit resultiert aus der Faser-eigenen Haftung. Man differenziert auch zwischen verfestigten und nicht-verfestigten Vliesen. Die Fasern sind statistisch verteilt. Die Vliese lassen sich nach den Fasermaterialien differenzieren. Als Fasermaterialien können mineralische Fasern, wie zum Beispiel Glas, Mineralwolle oder Basalt, tierische Fasern, wie zum Beispiel Seide oder Wolle, pflanzliche Fasern, wie zum Beispiel Baumwolle, Zellulose, chemische Fasern, wie zum Beispiel Polyamid, Polypropylen, Polyphenylensulfid, Polyacrylnitril, Polyimid, Polytetrafluorethylen, Aramid oder Polyester, eingesetzt werden. Die Fasern können mechanisch durch Vernadelung oder Wasserstrahlen verfestigt werden, chemisch durch Zugabe von Bindemitteln oder thermisch durch das Erweichen in einem geeignetem Gasstrom, zwischen beheizten Walzen oder auch in einem Dampfstrom.

Die Wahl der Fasermaterialien erfolgt nach der Temperaturbeständigkeit. So werden für die polymerbasierenden Fasern Polymere gewählt, deren Erweichungstemperatur bevorzugt mindestens 20°C, besonders bevorzugt mindestens 40 °C oberhalb der Erweichungstemperatur der thermoplastischen hitzeaktivierbaren Folie liegt.

In einer bevorzugten Auslegung der Erfindung werden Vliese auf Cellulosebasis eingesetzt. Das Flächengewicht der Vliese beträgt bevorzugt zwischen 4 und 100 g/m$^2$, besonders bevorzugt zwischen 10 und 70 g/m$^2$. Solche Vliese sind zum Beispiel kommerziell von der Firma Glatfelter erhältlich. Die Dicke der erfindungsgemäß eingesetzten Vliese beträgt vor der Einbettung in den Klebefolienverbund, also in der frei vorliegenden Form, bevorzugt zwischen 20 und 100 $\mu$m, äußerst bevorzugt zwischen 30 und 60 $\mu$m.

Bei der Ausrüstung und Tränkung mit den hitzeaktivierbaren Klebemassen kommt es zu einer Verringerung der Vliesträgerdicke insbesondere durch ein Zusammenpressen, so dass die Vliesträgerdicke im Klebefolienverbund regelmäßig geringer ist als die Dicke der frei vorliegenden Vliesträger.

**Verfahren**

Die Beschichtung der thermoplastischen Folie erfolgt bevorzugt aus der Schmelze. Um eine homogene Vermischung der thermoplastischen Polymere, der optional zugegebenen Harze und/oder weiterer Füllstoffe zu gewährleisten, kann es erforderlich sein, zuvor eine separate Compoundierung durchzuführen. Diese Vermischung kann zum Beispiel in einem Doppelschneckenextruder oder Kneter erfolgen. Für die Beschichtung reiner (nicht abgemischter) Thermoplasten bzw. der vorcompoundierten Mischungen genügt in der Regel ein Einschneckenextruder. Hier wird das Extrudat stufenweise bis zur Extrusionstemperatur aufgeheizt, also durch einen Aufheizprozess plastifiziert. Die Temperaturauswahl erfolgt unter Berücksichtigung des Melt Flow Index (MFI) bzw. der Melt Volume Rate (MVR) der eingesetzten Thermoplaste.

Für die Beschichtung kann generell zwischen dem Kontaktverfahren und dem kontaktlosen Verfahren unterschieden werden. Beide Verfahren sind grundsätzlich erfindungsgemäß durchführbar. Für die Extrusionsbeschichtung wird bevorzugt eine Extrusionsdüse (Breitschlitzdüse) eingesetzt, in der die Ausbildung des Films erfolgt. Dieser Prozess wird durch das Düsendesign innerhalb der Beschichtungsdüse beeinflusst. Die verwendeten Extrusionsdüsen können insbesondere aus einer der drei folgenden Kategorien stammen: T-Düse, Fischschwanz-Düse und Bügel-Düse. Die einzelnen Typen unterscheiden sich durch die Gestalt ihres Fließkanals. Durch diese Formen der Extrusionsdüse kann eine Orientierung innerhalb des Schmelzklebers erzeugt werden. Für den Fall, dass zwei- oder mehrschichtige thermoplastische hitzeaktivierbare Klebemassen hergestellt werden sollen, können auch Coextrusionsdüsen eingesetzt werden.

Nach dem Düsenaustritt erfolgt in einer bevorzugten Vorgehensweise die Beschichtung auf einen temporären Träger, wie zum Beispiel ein silikonisiertes Trennpapier. Während der Beschichtung kann die thermoplastische hitzeaktivierbare Klebemasse gereckt werden. Der Verstreckungsgrad wird dabei unter anderem durch das Verhältnis von Düsenspalt zur Filmdicke bestimmt. Eine Reckung tritt immer dann auf, wenn die Schichtdicke des Schmelzklebefilms auf dem zu beschichtenden Trägermaterial geringer ist als der Düsenspalt.

Zur Verbesserung der Verankerung auf dem temporären Träger kann es erforderlich sein, dass die hitzeaktivierbare Folie elektrostatisch aufgelegt wird. In dem folgenden Schritt wird das Trägervlies zur hitzeaktivierbaren Klebemasse zukaschiert. Der Prozess erfolgt in der Wärme. Daher kann es erforderlich sein, die hitzeaktivierbare Folie vor der Kaschierung zu erwärmen. Dies kann zum Beispiel durch IR-Strahler oder Heizwalzen erfolgen. In einer bevorzugten Vorgehensweise liegt die Kaschiertemperatur der hitzeaktivierbaren Klebemasse im Bereich der Erweichungstemperatur der hitzeaktivierbaren Klebemasse oder darüber. Durch die Wahl der Temperatur sowie des Kaschierdrucks kann die Eindringtiefe in das Trägervlies variiert werden.

In einem zweiten Schritt erfolgt die Beschichtung auf der gegenüberliegenden Seite. Hierfür kann analog der Beschichtung des ersten Schrittes vorgegangen werden, wobei dann der erste Strich bestehend aus Trennpapier, hitzeaktivierbare Klebemasse und Trägervlies in der Wärme zum zweiten Strich zukaschiert werden. Alternativ kann auch der zweite Strich der hitzeaktivierbaren Klebemasse direkt auf die andere Seite des Trägervlieses des ersten Strichs erfolgen. Wiederum kann die Penetrationstiefe im Trägervlies durch die Temperatur und den Kaschierdruck variiert werden. Dabei gelten die gleichen Regeln, die für die erste Kaschierung angewendet wurden.

Die thermoplastische hitzeaktivierbare Folie kann in einer weiteren Ausführungsform nicht nur mit einem temporären Trägermaterial, sondern auch mit zwei temporären Trägermaterialien ausgestattet sein. Diese Form des Doppelreleaseliners kann von Vorteil für die Herstellung von Stanzprodukten (Stanzlingen) sein.

Verklebung

*Metalle*

Die zu verklebenden Metallbauteile können generell aus allen geläufigen Metallen und Metalllegierungen gefertigt werden. Bevorzugt kommen Metalle, wie zum Beispiel Aluminium, Edelstahl, Stahl, Magnesium, Zink, Nickel, Messing, Kupfer, Titan, eisenhaltige Metalle und austenitische Legierungen zum Einsatz. Additivierungen und Legierungen jeglicher Art sind ebenfalls gängig. Zudem können die Bauteile mehrlagig aus unterschiedlichen Metallen aufgebaut sein.

Aus optischen Gründen und zur Verbesserung der Oberflächeneigenschaften und -qualität werden an den Metallbauteilen häufig Oberflächenmodifizierungen vorgenommen. So kommen beispielsweise häufig gebürstete Aluminium- und Edelstahlbauteile zum Einsatz. Für Aluminium und Magnesium sind Anodisierungen gängig, die häufig mit farbgebenden Prozessen kombiniert werden.

Als Metallisierungen kommen neben Chromatierungen auch Beschichtungen mit zum Beispiel Gold oder Silber zur Passivierung zum Einsatz.

Weiterhin üblich sind jegliche Art von Beschichtungen mit Schutz- und/oder Farblacken, sowie Oberflächenbeschichtungen, die mittels Physikalischer Gasphasenabscheidung (PVD) oder Chemischer Gasphasenabscheidung (CVD) aufgebracht werden.

Die Metallteile können die unterschiedlichsten Formen und Größen einnehmen und flach oder dreidimensional geformt sein. Weiterhin können auch die Funktionen sehr unterschiedlich sein und reichen von Dekorationselementen, zu Versteifungsträgern, Rahmenbauteilen, Abdeckungen etc.

Die Klebefolie eignet sich hervorragend für die Verklebung wie vorstehend beschriebener Metallteile.

*Kunststoffteile*

Die Kunststoffteile für Konsumgüterelektronikbauteile basieren vielfach auf im Spritzguss verarbeitbare Kunststoffe. So umfasst diese Gruppe zum Beispiel Acrylnitril-Butadien-Styrol-Copolymere (ABS), Polycarbonate (PC), ABS/PC-Blends, PMMA, Polyamide, Glasfaserverstärkte Polyamide, Polyvinylchlorid, Polyvinylenfluorid, Cellulose Acetat, Cycloolefin Copolymere, Flüssigkristallpolymere (LCP), Polylactid, Polyetherketone, Polyetherimid, Polyethersulfon, Polymethacrylmethylimid, Polynmethylpenten, Polyphenylether, Polyphenylensulfid, Polyphthalamid, Polyurethane, Polyvinylacetat, Styrol Acrylnitril Copolymere, Polyacrylate bzw. Polymethacrylate, Polyoxymethylen, Acrylester Styrol-Acrylnitril Copolymere, Polyethylen, Polystyrol, Polypropylen oder Polyester [zum Beispiel Polybutylenterephthalate (PBT), Polyethylenterephthalat (PET)].

Die Bauteile können jede beliebige Form annehmen, die für die Herstellung eines Bauteils oder Gehäuses für Konsumgüterelektronikartikel erforderlich ist. In der einfachsten Form sind sie planar. Weiterhin sind aber auch 3-dimensionale Bauteile durchaus üblich. Die Bauteile können auch die verschiedensten Funktionen einnehmen, wie zum Beispiel Gehäuse oder Sichtfenster, oder Versteifungselement, etc.

Die Klebefolie eignet sich ebenfalls hervorragend für die Verklebung wie vorstehend beschriebener Kunststoffteile.

*Gläser*

Für Fenster- und Displayanwendungen kommen verstärkt Gläser zum Einsatz. Diese können beispielsweise aus Mineralglas, Quarzglas oder Saphirglas gefertigt werden. Durch diverse Modifikationen können die optischen, sowie physikalischen Eigenschaften der Gläser gezielt beeinflusst werden. Aus dekorativen Gründen werden beispielsweise Rauchgläser oder eingefärbte Gläser eingesetzt.

Mit Oberflächenbeschichtungen oder Lackierungen, die beispielsweise mittels Sprühauftrag oder über einen Gasphasenabscheidungsprozess aufgebracht werden können, kann man ebenfalls das optische Erscheinungsbild gezielt beeinflussen. Zudem sind Anti-Reflex-Schichten, kratzresistente Beschichtungen und andere funktionelle Oberflächenbeschichtungen gängig.

Die Gläser liegen in ihrer einfachsten Form planar als Flachglas vor, können aber auch zu dreidimensionalen Fenstern oder Bauteilen gegossen werden.

Die Klebefolie eignet sich weiterhin hervorragend für die Verklebung wie vorstehend beschriebener Gläser.

**Prozess -Prelaminierung**

Für die Anwendung in Konsumgüterelektronikartikeln werden die hitzeaktivierbaren Folien üblicherweise zu Stanzlingen weiterverarbeitet. Diese werden entweder durch ein Laserschneidverfahren oder durch Flachtbettstanzen oder durch Rotationsstanzen hergestellt. Es existieren noch viele weitere dem Fachmann bekannte Herstellungsverfahren für Stanzlinge.

Der Stanzling hat üblicher Weise die Dimension des Metallteils, kann aber auch etwas kleiner sein, um leichte Ausquetschprozesse während des Verklebungsprozesses zu erlauben. Weiterhin kann aus konstruktiven Gründen es auch erforderlich sein, vollflächige Stanzlinge einzusetzen.

Im einfachsten Fall wird der Stanzling der hitzeaktivierbaren Folie ohne temporären Träger manuell, zum Beispiel mit Hilfe einer Pinzette, auf dem Metallteil bzw. zwischen den zusammenzufügenden Bauteilen positioniert.

In einer weiteren Ausführung wird der hitzeaktivierbare Klebebandstanzling nach der Positionierung auf dem Metall mit einer Wärmequelle behandelt, wodurch sich die Haftung des Stanzlings zum Metall erhöht. Im einfachsten Fall kann als Wärmequelle ein IR-Strahler, ein Bügeleisen oder eine Heizplatte eingesetzt werden. Für diesen Prozess ist es von Vorteil, wenn der Stanzling noch mit einem temporären Trägermaterial ausgestattet ist, um ein Anhaften des Klebefilms am Werkzeug bzw. der Wärmequelle zu verhindern.

In einer weiteren sehr gängigen Form wird das Metallteil auf den hitzeaktivierbaren Klebebandstanzling platziert. Die Platzierung erfolgt auf der offenen Seite. Auf der Rückseite befindet sich noch das temporäre Trägermaterial. Anschließend wird durch eine Wärmequelle thermische Energie (Wärme) durch das Metall in das thermoplastische hitzeaktivierbare Klebeband eingebracht. Dadurch wird das Klebeband tackig und haftet stärker am Metall als an dem Release-Liner. Es wird durch das Metall geheizt.

Erfinudngsgemäß vorteilhaft wird die während der Prelaminierung in den hitzeaktivierbaren Film eingebrachte Wärmemenge dosiert und sollte nur maximal 25 °C oberhalb der Temperatur liegen, die erforderlich ist, um ein sicheres Anhaften des Films am Metallbauteil zu gewährleisten.

Für die Einbringung der Wärme wird in einer bevorzugten Auslegung eine Heizpresse eingesetzt. Der Stempel der Heizpresse ist dabei zum Beispiel aus Aluminium, Messing oder Bronze gefertigt und wird in seiner Ausformung in der Regel den Konturen des Metallteils bzw. den Dimensionen des Stanzlings angepasst. Um lokale Wärmeschädigungen an den Bauteilen zu verhindern, kann der Stempel zudem mit partiellen Aussparungen versehen sein.

Druck und Temperatur werden möglichst gleichmäßig eingebracht, wobei bevorzugt alle Parameter (Druck, Temperatur, Zeit) in Abhängigkeit von den verwendeten Materialien (Art des Metalls, Metalldicke, Art der thermoplastischen hitzeaktivierbaren Folie, etc.) eingestellt werden.

Um eine genaue Positionierung des Stanzlings auf dem Metallteil zu gewährleisten, werden in der Regel Formteile eingesetzt, die den Konturen der zu verklebenden Bauteile angepasst sind, wodurch ein Verrutschen verhindern wird.

Durch Führungsstifte im Formteil und entsprechende Führungslöcher im temporären Trägermaterial der hitzeaktivierbaren Folie kann die exakte Positionierung zwischen Stanzling und Metallteil sichergestellt werden. Andere Positionierungsmöglichkeiten können ebenfalls realisiert werden.

Nach der Wärmeaktivierung wird das Metallteil mit der auflaminierten hitzeaktivierbaren Folie vom Formteil entfernt.

Der gesamte Prozess kann auch in einen automatischen Prozess überführt werden.

**Verklebungsprozess (Bonding Prozess)**

Der Verklebungsprozess zwischen Metallteil und Kunststoff-, Glas- oder Metallbauteil wird im Einzelnen durch die folgenden Prozessschritte 1 bis 5 beschrieben.

1) Fixierung des Kunststoff-, Glas- oder Metalbauteils auf einem Formbauteil
2) Platzierung des zu verklebenden Metallteils mit hitzeaktivierbarer Folie (ohne temporären Träger) auf dem Kunststoff-, Glas- oder Metallbauteil
3) Applizierung von Druck und Temperatur durch Heizpressstempel
4) Optionaler Rückkühlschritt
5) Entfernung der verklebten Bauteile aus dem Formbauteil

Die Erfindung umfasst die Verklebung von Metallbauteilen mit Kunststoffbauteilen, Metallbauteilen mit Gläsern und Metallbauteilen mit anderen Metallbauteilen, wobei die Metalle die gleiche oder eine unterschiedliche chemische Zusammensetzung aufweisen können.

Das zur Aufnahmen der Kunststoff-, Glas- oder Metallteile dienende Formbauteil besteht insbesondere aus wärmebeständigem Material. Dies sind zum Beispiel Metalle. Es können aber auch Kunststoffe eingesetzt werden, wie zum Beispiel fluorierte Polymere, oder Duroplaste, die auch eine gute Härte aufweisen und schwer verformbar sind.

Im Prozessschritt 3 werden Druck und Temperatur appliziert. Dies erfolgt durch einen Heizstempel, der aus einem Material mit guter thermischer Leitfähigkeit besteht. Übliche Materialien sind zum Beispiel Kupfer, Messing, Bronze oder Aluminium. Es können aber auch andere Metalle oder Legierungen eingesetzt werden. Des Weiteren sollte der Heizpressstempel bevorzugt die Form der Oberseite des Metallteils einnehmen. Diese Form kann wiederum 2-dimensionaler oder 3-dimensionaler Natur sein. Der Druck wird üblicher Weise über einen Pneumatikzylinder aufgebracht. Die Applizierung muss aber nicht unbedingt über Luftdruck erfolgen. Auch sind zum Beispiel hydraulische Pressvorrichtungen oder elektromechanische Stellantriebe zum Beispiel über Spindeln möglich. Des Weiteren kann es von Vorteil sein, mehrfach Druck und Temperatur einzubringen, um zum Beispiel durch Reihenschaltung oder Rotationsprinzip den Prozessdurchsatz zu erhöhen. Die Heizpressstempel müssen in diesem Fall nicht alle mit der gleichen Temperatur und/oder gleichem Druck betrieben werden. Weiterhin können auch die Kontaktzeiten der Stempel unterschiedlich gewählt werden.

Im Rahmen dieser Erfindung weist im Prozessschritt 3 die thermoplastische hitzeaktivierbare Folie ein verringertes Ausquetschverhalten auf. Das Ausquetschverhalten ist, bei gleichen Prozessparametern (Temperatur, Druck, Zeit), um mindestens 10 %, bevorzugt um mindestens 20 % reduziert, verglichen mit einer hitzeaktivierbaren Klebefolie gleichen Aufbaus und gleicher Dimensionen, aber vollständiger Vliesdurchtränkung. Erfindungsgemäß ausgestaltete Stanzlinge weisen nicht vorhersehbar ein derart optimiertes Verhalten auf.

Durch das reduzierte Ausquetschverhalten zeigt der Stanzling während der Verklebung eine bessere Formstabilität, was insbesondere bei der Verklebung von sichtbaren Bauteilen wie beispielsweise Dekorelementen von Vorteil ist, da hier unerwünschte Klebemassenrückstände außerhalb der eigentlichen Klebefuge aus optischen Gründen nicht tolerierbar sind. Zudem kann man bei Heißklebefolien mit geringer Ausquetschneigung die Stanzlingsform (insbesondere die -fläche) größer wählen, da weniger Platz für den ungewollten Materialaustritt berücksichtigt werden muss. Aus dem gleichen Grund kann man bei diesen Systemen auch häufig auf Unterbrechungen innerhalb der Stanzlinge oder konstruktive Lösungen an den Fügeteilen selbst verzichten, die ebenfalls zur Aufnahme des ungewollten Kleberaustrittes dienen.

Das Ausquetschverhalten der thermoplastischen hitzeaktivierbaren Folie wird über den Ausquetschtest definiert (siehe Experimenteller Teil). Hier wird die Ausquetschrate unter Standardbedingungen bestimmt.

Der Rückkühlschritt (Prozessschritt 4) stellt einen optionalen Prozessschritt dar und dient zur Optimierung der Verklebungsperformance. Zudem ermöglicht er ein einfacheres manuelles Entfernen der Bauteile. Für die Rückkühlung wird in der Regel ein metallischer Pressstempel verwendet, dessen Form analog zum Heißpressstempel ist, aber keine Heizelemente enthält und mit Raumtemperatur arbeitet. In seltenen Fällen kommen auch aktiv gekühlte Pressstempel oder Kühlsysteme zum Einsatz, die mittels Luftstrom dem zu kühlenden Bauteil die Wärme entziehen.

In dem letzten Prozessschritt wird dann das verklebte Bauteil aus dem Formbauteil entfernt.

Die Heizpressstempel für Prelaminierung und Bonding werden bevorzugt in einem Temperaturbereich von 60 °C bis 300 °C betrieben, je nach Temperaturstabilität der Bauteile sowie der Aktivierungs- oder Schmelztemperatur der thermoplastischen hitzeaktivierbaren Folie. Die Prozesszeiten belaufen sich üblicher Weise auf 2,5 s bis 15 s pro Press-Stempelschritt. Weiterhin kann es auch erforderlich sein, den Druck zu variieren. Durch sehr hohe Drücke kann die thermoplastische hitzeaktivierbare Folie trotz der erfindungsgemäßen Eigenschaften vermehrt ausquetschen. Geeignete Drücke belaufen sich auf 1,5 bis 10 bar, berechnet auf die Verklebungsfläche. Auch hier haben die Stabilität der Materialien sowie das Fließverhalten der hitzeaktivierbaren Folie einen großen Einfluss auf den zu wählenden Druck.

**Experimetelle Verifizierung**

**Testmethoden:**

Verklebunggsfestigkeit A)

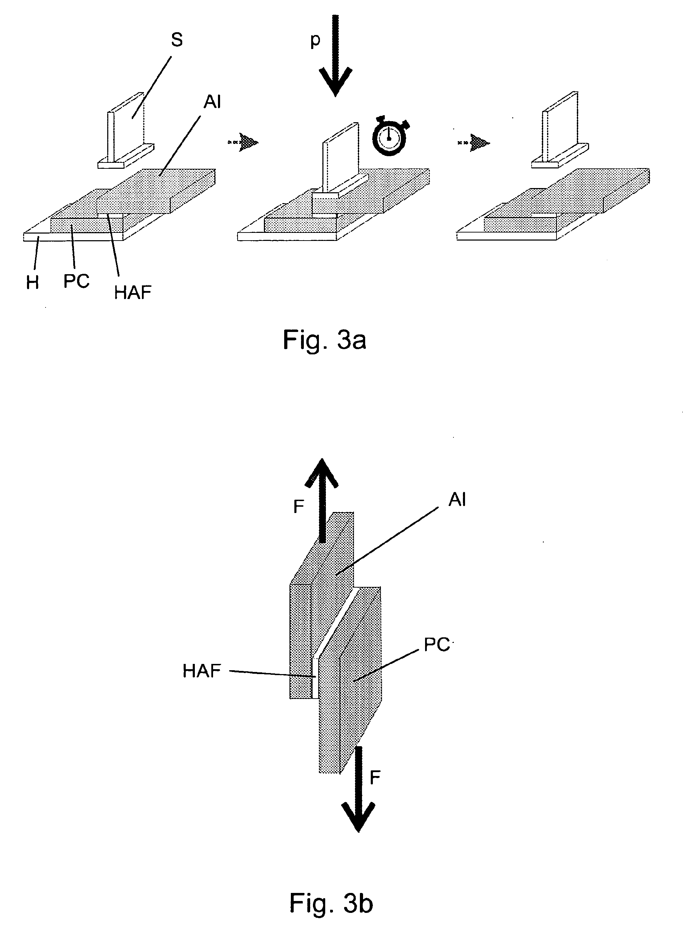

Die Verklebungsfestigkeit wird mit einem Dynamischen Schertest bestimmt. Das Prinzip dieser Messung ist in den Figuren 3a und 3b dargestellt. Es wird eine Aluminium-Platte (Al) (Dicke: 1,5 mm; Breite: 2 cm) mit einer Polycarbonat-Platte (PC) (Dicke: 3 mm; Breite: 2 cm) mittels einer thermoplastischen hitzeaktivierbaren Folie (HAF) (Dicke: 150 $\mu$m) verbunden. Die Verklebungsfläche beträgt 2 cm$^2$.

In einem ersten Schritt wird die hitzeaktivierbare Folie auf das Aluminium mit Hilfe einer 120°C heißen Heizplatte (H) laminiert. Anschließend wird die Trennfolie abgezogen. Die Verklebung der Prüfkörper wird in einer Heizpresse durchgeführt, wobei über die Al-Seite erhitzt wird (Fig. 3a). Die Hitzeaktivierung wird mit einem 150 °C heißen Heizpressstempel (S) bei einem Druck (p) von 5 bar und 5 s Verpressdauer durchgeführt. Nach der Heißverklebung kann die Qualität der Verklebung (Auftreten von Blasen) durch das transparente Polycarbonat (PC) beurteilt werden (siehe Fig. 3a).

Zur Austestung werden die Prüfmuster (Verbund aus Al, HAF und PC) mit einer Zugprüfmaschine mit einer Prüfgeschwindigkeit von 10 mm/min auseinandergerissen (siehe Fig. 3b). Die auftretenden Kräfte (F) werden gemessen. Das Ergebnis wird in N/mm$^2$ angegeben und stellt die auf die Verklebungsfläche bezogene maximale Kraft F dar, die gemessen wird, um die Prüfkörper (Al und PC) voneinander zu trennen. Die Messung wird bei 23 °C und 50 % relativer Luftfeuchtigkeit durchgeführt.

Ausquetschverhalten B)

Die thermoplastische hitzeaktivierbare Folie wird als kreisrunder Stanzling mit einem Durchmesser von 29,5 mm ausgestanzt. Die Folie ist sowohl von der Oberseite als auch von der Unterseite mit einem silikonisierten Glassine-Liner abgedeckt.

Anschließend wird dieser Stanzling in eine Heizpresse eingebracht und mit 75 N/cm$^2$ Druck und 150 °C (Temperatur der Heizpresse, beidseitig beheizt) für 10 Sekunden beaufschlagt. Durch die Aufbringung von Druck und Temperatur quetscht die hitzeaktiviebare Folie kreisförmig aus, was zu einem Anstieg der Fläche führt. Die Ausquetschrate lässt sich definitionsgemäß nach folgender Formel berechnen:

$$OR = \frac{Area_{after} - Area_{initial}}{Area_{initial}} \times 100\,\%$$

OR = die Ausquetschrate in %
$Area_{after}$ = die Fläche des Thermoplasten nach der Verpressung
$Area_{initial}$ = die Fläche des Thermoplasten vor der Verpressung

Falltest C)

Zunächst werden Prüflinge wie in identischer weise zur Messmethode A (Verklebungsfestigkeit) hergestellt, vgl. auch Fig. 3a.

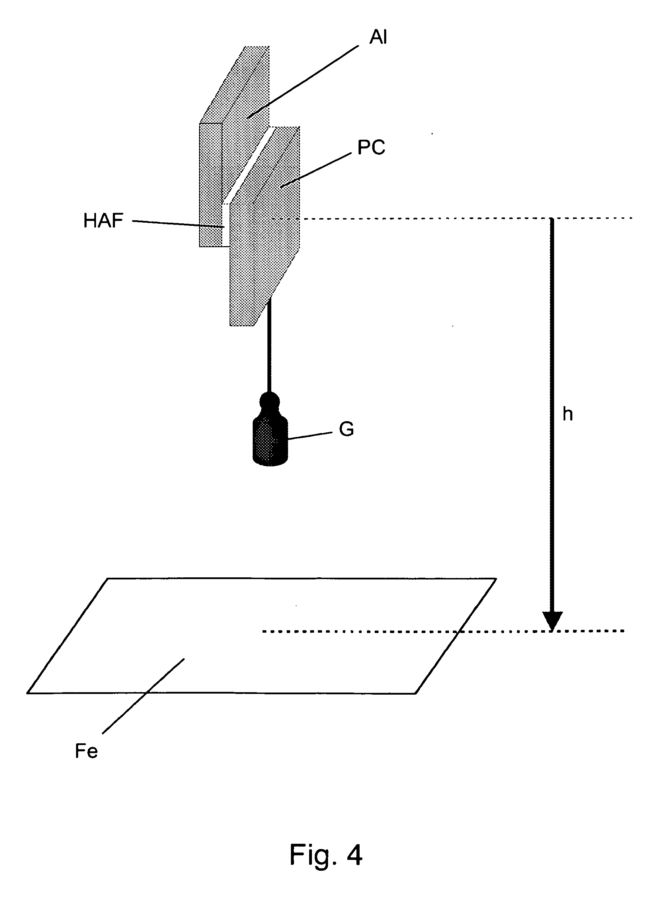

Anschließend wird der Falltest durchgeführt (Fig. 4). An der Polycarbonatplatte (PC) wird ein 50 g schweres Gewicht (G) befestigt. Dann wird der gesamte Verbund aus unterschiedlichen Höhen (h) auf eine Stahlplatte (Fe) fallen gelassen [Bezug für die Fallhöhe: Schwerpunkt des Fallkörpers aus dem Klebeverbund (Al, HAF, PC) und dem Gewicht (G)].

Es wird die Fallhöhe (h) bestimmt, bei der die Verklebung mit der hitzeaktivierbaren Folie den Stoß noch auffangen kann und der Klebeverbund aus der Aluminiumplatte (Al), der hitzeaktivierbaren Folie (HAF) und der Polycarbonatplatte (PC) nicht auseinander fällt.

Der Test wird bei unterschiedlichen Temperaturen durchgeführt.

***Untersuchte Proben***

Es wurden hitzeaktivierbare Folien auf Basis zweier unterschiedliche hitzeaktivierbarer Klebemassen (HA-Massen) untersucht:

| | |
|---|---|
| HA-Masse 1: | thermoplastischer, gesättigter linearer Copolyester auf Basis von 47 Gew.-% Terephthalsäure, 12 Gew.-% Isophthalsäure, 9,5 Gew.-% 1,4 Butandiol, 31,5 Gew.-% Hexandiol |
| | Schmelzpunkt 100 °C (DIN 53765); Glasübergangstemperatur 10,0 °C (DIN 53765), Viskosität 240000 cP bei 160 °C (DIN ISO 1133), Melt Flow 40,0 g/120 min bei 160 °C (DIN ISO 1133) |
| | (kommerziell erhältlich beispielsweise von der Firma Degussa unter der Handelsbezeichnung DYNAPOL® S 1227) |
| | |
| HA-Masse 2: | thermoplastischer Copolyester auf Basis von 10,5 Gew.-% Adipinsäure, 50 Gew.-% Terephthalsäure, 13 Gew.-% 1,4-Butandiol, 26,5 Gew.-% Hexandiol; |
| | Schmelzpunkt 109 °C (DSC, Mittelwert); Glasübergangstemperatur -2 °C (DSC, Mittelwert), Viskosität 650000 cP bei 160 °C (DIN ISO 1133), Melt Flow 16,0 g/10 min bei 160 °C (DIN ISO 1133) |
| | (kommerziell erhältlich beispielsweise von der Firma EMS Griltech unter der Handelsbezeichnung Griltex® D 1442E) |

Referenzbeispiel 1)

Die HA-Masse 1 wurde zwischen zwei Lagen silikonisiertem Glassine-Trennpapier in einer Heißpresse bei 140 °C auf 150 $\mu$m ausgepresst. Der Schmelzbereich des Copolyesters liegt zwischen 86 °C und 109 °C.

Referenzbeispiel 2)

Die HA-Masse 1 wurde zwischen zwei Lagen silikonisiertem Glassine-Trennpapier beidseitig auf einem 13 g/m² Vlies (Teebeutel-Vlies der Firma Glatfelter, Cellulose-Basis) in einer Heißpresse bei 150 °C verpresst. Die Schichtdicke des doppelseitigen Klebebandes betrug ohne Glassine-Trennpapier 150 $\mu$m. Der Schmelzbereich des Copolyesters liegt zwischen 86°C und 109°C.

Beispiel 1)

Die HA-Masse 1 wurde zwischen zwei Lagen silikonisiertem Glassine-Trennpapier in einer Heißpresse bei 140 °C auf 65 $\mu$m ausgepresst. Der Schmelzbereich des Copolyesters liegt zwischen 86 °C und 109 °C. Anschließend wurde ein 13 g/m² Vlies (Teebeutel-Vlies der Firma Glatfelter, Cellulose-Basis) beidseitig mit dem 65 $\mu$m dicken Dynapol™ S1227 beschichtet. Die Eindringtiefe in das Vlies wurde durch einen Heizrollenlaminator gesteuert. So wurde dieses Beispiel bei 130°C und mit einer Geschwindigkeit von 2 m/min laminiert. Die Eindringtiefe wurde von beiden Seiten durch REM-Aufnahmen bestimmt. Hierbei wurde die durchschnittliche Schichtdicke des Trägervlieses bestimmt, die durch den Schmelzkleber nicht durchdrungen wurde. Dieser Wert wird durch die Schichtdicke des Trägervlieses im (nicht verklebten) Klebefolienverbund geteilt und in Prozent angegeben. Der durchschnittliche Durchtränkungsgrand ergibt sich aus 100 % abzüglich des bestimmten Prozent-Wertes für den nicht getränkten Bereich. In diesem Beispiel wurde ein durchschnittlicher Durchtränkungsgrad von 56 % bestimmt.

Beispiel 2)

Die HA-Masse 1 wurde zwischen zwei Lagen silikonisiertem Glassine-Trennpapier in einer Heißpresse bei 140 °C auf 65 $\mu$m ausgepresst. Der Schmelzbereich des Copolyesters liegt zwischen 86 °C und 109 °C. Anschließend wurde ein 13 g/m² Vlies (Teebeutel-Vlies der Firma Glatfelter, Cellulose-Basis) beidseitig mit dem 65 $\mu$m dicken Dynapol™ S1227 beschichtet. Die Eindringtiefe in das Vlies wurde durch einen Heizrollenlaminator gesteuert. So wurde dieses Beispiel bei 130 °C und mit einer Geschwindigkeit von 0,5 m/min laminiert. Es wurde analog zu der Bestimmungsweise in Beispiel 1 ein durchschnittlicher Durchtränkungsgrad von 75 % bestimmt.

Referenzbeispiel R3)

Die HA-Masse 2 wurde zwischen zwei Lagen silikonisiertem Glassine-Trennpapier in einer Heißpresse bei 140°C auf 150 $\mu$m ausgepresst. Der Schmelzbereich des Polymeren liegt zwischen 93 °C und 121 °C.

Referenzbeispiel R4)

Die HA-Masse 2 wurde zwischen zwei Lagen silikonisiertem Glassine-Trennpapier beidseitig auf einem 13 g/m$^2$ Vlies (Teebeutel-Vlies der Firma Glatfelter, Cellulose-Basis) in einer Heißpresse bei 150 °C verpresst. Die Schichtdicke des doppelseitigen Klebebandes betrug ohne Glassine-Trennpapier 150 $\mu$m. Der Schmelzbereich des Copolyesters liegt zwischen 93 °C und 121 °C. Es wurde mittels REM-Aufnahmen ein durchschnittlicher Durchtränkungsgrad von 100 % bestimmt, d.h. das Muster war zu 100 % vom Schmelzkleber durchtränkt.

Beispiel 3)

Die HA-Masse 2 wurde zwischen zwei Lagen silikonisiertem Glassine-Trennpapier in einer Heißpresse bei 150 °C auf 65 $\mu$m ausgepresst. Der Schmelzbereich des Copolyesters liegt zwischen 93 °C und 121 °C. Anschließend wurde ein 13 g/m$^2$ Vlies (Teebeutel-Vlies der Firma Glatfelter, Cellulose-Basis) beidseitig mit dem 65 $\mu$m dicken Grilltex™ 1442 E beschichtet. Die Eindringtiefe in das Vlies wurde durch einen Heizrollenlaminator gesteuert. So wurde dieses Beispiel bei 135 °C und mit einer Geschwindigkeit von 2 m/min laminiert. Es wurde analog zu der Bestimmungsweise in Beispiel 1 ein durchschnittlicher Durchtränkungsgrad von 65 % bestimmt.

Beispiel 4)

Die HA-Masse 2 wurde zwischen zwei Lagen silikonisiertem Glassine-Trennpapier in einer Heißpresse bei 150 °C auf 65 $\mu$m ausgepresst. Der Schmelzbereich des Copolyesters liegt zwischen 93 °C und 121 °C. Anschließend wurde ein 13 g/m$^2$ Vlies (Teebeutel-Vlies der Firma Glatfelter, Cellulose-Basis) beidseitig mit dem 65 $\mu$m dicken Grilltex™ 1442 E beschichtet. Es wurde analog zu der Bestimmungsweise in Beispiel 1 ein durchschnittlicher Durchtränkungsgrad von 80 % bestimmt.

***Ergebnisse***

Beispiel 1, 2, 3 und 4 sind Beispiele für hitzeaktivierbare Folien mit dem erfindungsgemäßen Aufbau. Referenzbeispiel R1 und Referenzbeispiel R2 sind typische Ausgestaltungen hitzeaktivierbarer Klebefolien mit den in Beispiel 1 und 2 eingesetzten Thermoplasten und weisen die gleiche Schichtdicke auf. Referenzbeispiel R1 besitzt kein Trägervlies. Im Referenzbeispiel R2 wird das zu Beispiel 1 und 2 identische Trägervlies eingesetzt, ist aber hier vollständig durchtränkt.
Referenzbeispiel R3 und Referenzbeispiel R4 sind typische Ausgestaltungen hitzeaktivierbarer Klebefolien mit den in Beispiel 3 und 4 eingesetzten Thermoplasten und weisen die gleiche Schichtdicke auf. Referenzbeispiel R3 besitzt kein Trägervlies. Im Referenzbeispiel R4 wird das zu Beispiel 3 und 4 identische Trägervlies eingesetzt, ist aber hier vollständig durchtränkt.
Zunächst wurden von allen Beispielen die Verklebungsfestigkeiten gemessen. Hierfür wurde nach Testmethode A vorgegangen. Die Ergebnisse sind in Tabelle 1 dargestellt.

Tabelle 1:

| Beispiele | Testmethode A |
|---|---|
| 1 | 5,3 N/mm$^2$ |
| 2 | 5,3 N/mm$^2$ |
| 3 | 6,5 N/mm$^2$ |
| 4 | 6,4 N/mm$^2$ |
| Referenzbeispiel R1 | 6.0 N/mm$^2$ |
| Referenzbeispiel R2 | 5,4 N/mm$^2$ |
| Referenzbeispiel R3 | 7.1 N/mm$^2$ |
| Referenzbeispiel R4 | 6,7 N/mm$^2$ |

Die Ergebnisse in Tabelle 1 belegen, dass die erfindungsgemäßen Beispiele ähnliche Verklebungsfestigkeiten zu den Referenzbeispielen aufweisen, insbesondere wenn die Thermoplasten die gleiche chemische Zusammensetzung aufweisen.

In einem weiteren Test wurde von allen Beispielen das Ausquetschverhalten bestimmt. Hierfür wurde nach Testmethode B vorgegangen. Die Ergebnisse sind in der Tabelle 2 dargestellt.

Tabelle 2:

| Beispiele | Testmethode B |
|---|---|
| 1 | 23,2 % |
| 2 | 21,0 % |
| 3 | 15,3 % |
| 4 | 16,4 % |
| Referenzbeispiel R1 | 51,9 % |
| Referenzbeispiel R2 | 22,6 % |
| Referenzbeispiel R3 | 45,8 % |
| Referenzbeispiel R4 | 17,4 % |

Der Tabelle 2 kann entnommen werden, dass durch den erfindungsgemäßen Aufbau das Ausquetschverhalten gegenüber den Referenzbeispielen ohne Träger deutlich verbessert wird.

Nach der Verklebung wurden die Beispiele einem Falltest unterzogen. Die Ergebnisse sind in Tabelle 3 dargestellt. Die jeweilige Fallhöhe wird in cm angegeben.

Tabelle 3:

| Beispiele | Testmethode C bei rt | Testmethode C bei -20°C |
|---|---|---|
| 1 | 170 cm | 40 cm |
| 2 | 180 cm | 40 cm |
| 3 | >220 cm | 110 cm |
| 4 | >220 cm | 120 cm |
| Referenzbeispiel R1 | 90 cm | 10 cm |
| Referenzbeispiel R2 | 110 cm | 15 cm |
| Referenzbeispiel R3 | 150 cm | 60 cm |
| Referenzbeispiel R4 | 170 cm | 70 cm |

Tabelle 3 kann entnommen werden, dass die erfindungsgemäßen Beispiele 1 bis 4 bei - 20 °C und bei Raumtemperatur (23 °C) eine deutlich bessere Schockempfindlichkeit gegenüber den Referenzbeispielen R1 bis R4 aufweisen. Dies spiegelt sich wiederum in der möglichen höheren Fallhöhe wider. Auch ist eine deutliche Verbesserung gegenüber den Referenzbeispielen mit vollständiger Trägervliesdurchtränkung festzustellen.

Die experimentellen Untersuchungen haben gezeigt, dass die erfindungsgemäßen Beispiele 1 bis 4 sehr hohe Verklebungsfestigkeiten ermöglichen, eine geringeres Ausquetschverhalten gegenüber thermoplastischen hitzeaktivierbaren Folien ohne Träger aufweisen sowie eine besser Schockfestigkeit bei Raumtemperatur als auch bei - 20 °C aufweisen. Weiterhin werden im Klimawechseltest durch die Vliesverstärkung mechanische Spannungen durch die unterschiedlichen thermischen Expansionskoeffizienten der Substrate besser kompensiert, so dass höhere Verklebungsfestigkeit gemessen werden als im Vergleich ohne Vliesverstärkung.

Es konnte gezeigt werden, dass die Verwendung der hitzeaktivierbaren Klebebändern zur Lösung der objektiven Aufgabe der Erfindung hervorragend geeignet sind. Ein "Luftpolster" (nicht mit Klebemasse getränkter Bereich) innerhalb der hitzeaktivierbaren Klebefolien bewirkt eine Verminderung des Ausquetschverhaltens und eine Verbesserung des Schockabsorptionsvermögens.

**Patentansprüche**

**1.** Verwendung einer Klebefolie, umfassend einen Vliesträger und zwei auf den beiden Seiten des Vliesträgers angeordneten Schichten aus hitzeaktivierbaren Klebemassen, wobei
beide Klebemassen derart in den Vliesträger eingedrungen sind, dass insgesamt zwischen 20 % und 92 % des Faserzwischenvolumens des Vliesträgers im Klebfolienverbund mit der Klebemasse durchtränkt sind, mit der Maßgabe, dass die auf den beiden Seiten des Fließträgers eingedrungenen Klebemassen jeweils mindestens 10 % des Faserzwischenvolumens des Fließträgers im Verbund ausmachen,
zur Verklebung von Bauteilen elektronischer Geräte, wobei Metall mit Kunststoff, Glas oder Metall verklebt wird.

2. Verwendung nach Anspruch 1, **dadurch gekennzeichnet, dass**
insgesamt zwischen 40 % und 80 % des Faserzwischenvolumens des Vliesträgers in der Klebefolie mit der Klebemasse durchtränkt sind.

3. Verwendung nach Anspruch 1, **dadurch gekennzeichnet, dass**
die auf beiden Seiten des Fließträgers eingedrungenen Klebemassen jeweils mindestens 20 % des Faserzwischenvolumens des Fließträgers im Verbund ausmachen.

4. Verwendung nach einem der vorangehenden Ansprüche, **dadurch gekennzeichnet, dass**
die Klebemassen auf beiden Seiten des Vliesträgers identisch sind.

5. Verwendung nach einem der vorangehenden Ansprüche, **dadurch gekennzeichnet, dass**
die auf beiden Seiten des Fließträgers eingedrungenen Klebemassen jeweils einen gleichen Anteil des Faserzwischenvolumens des Fließträgers im Verbund ausmachen.

6. Verwendung einer Klebefolie umfassend einen Vliesträger und zwei auf den beiden Seiten des Vliesträgers angeordneten Schichten aus hitzeaktivierbaren Klebemassen, wobei
beide Klebemassen derart in den Vliesträger eingedrungen sind, dass insgesamt zwischen 20 % und 92 % der Schichtdicke des Vliesträgers mit der Klebemasse durchtränkt sind, mit der Maßgabe, dass auf beiden Seiten des Fließträgers jeweils mindestens 10 % der Vliesträgerdicke durchtränkt sind,
zur Verklebung von Bauteilen elektronischer Geräte, wobei Metall mit Kunststoff, Glas oder Metall verklebt wird.

7. Verwendung nach Anspruch 5, **dadurch gekennzeichnet, dass**
insgesamt zwischen 40 % und 80 %, bevorzugt zwischen 50 % und 75 %, der Schichtdicke des Vliesträgers mit der Klebemasse durchtränkt sind.

8. Verwendung nach einem der vorangehenden Ansprüche, **dadurch gekennzeichnet, dass**
die hitzeaktivierbare Klebemasse eine solche auf Basis eines oder mehrerer thermoplastischer Polymere ist.

9. Verwendung nach einem der vorangehenden Ansprüche zur Verklebung im Bereich der Kommunikations- und/oder Unterhaltungselektronik.

## Claims

1. Use of an adhesive sheet comprising a fleece carrier and, arranged on the two sides of the fleece carrier, two layers of heat-activatable adhesives, with both adhesives having penetrated the fleece carrier such that a total of between 20% and 92% of the fiber interstitial volume of the fleece carrier in the adhesive sheet assembly is saturated with the adhesive, with the proviso that the adhesives penetrated on the two sides of the fleece carrier each make up at least 10% of the fiber interstitial volume of the fleece carrier in the assembly, for adhesively bonding components of electronic devices, with metal being adhesively bonded to plastic, glass or metal.

2. Use according to Claim 1, **characterized in that** a total of between 40% and 80% of the fiber interstitial volume of the fleece carrier in the adhesive sheet is saturated with the adhesive.

3. Use according to Claim 1, **characterized in that** the adhesives penetrated on both sides of the fleece carrier each make up at least 20% of the fiber interstitial volume of the fleece carrier in the assembly.

4. Use according to any of the preceding claims, **characterized in that** the adhesives on both sides of the fleece carrier are identical.

5. Use according to any of the preceding claims, **characterized in that** the adhesives penetrated on both sides of the fleece carrier each make up an equal fraction of the fiber interstitial volume of the fleece carrier in the assembly.

6. Use of an adhesive sheet comprising a fleece carrier and, arranged on the two sides of the fleece carrier, two layers of heat-activatable adhesives, with both adhesives having penetrated the fleece carrier such that a total of between 20% and 92% of the layer thickness of the fleece carrier is saturated with the adhesive, with the proviso that on both sides of the fleece carrier in each case at least 10% of the fleece carrier thickness is saturated, for adhesively bonding components of electronic devices, with metal being adhesively bonded to plastic, glass or metal.

7. Use according to Claim 5, **characterized in that** a total of between 40% and 80%, preferably between 50% and 75%, of the layer thickness of the fleece carrier is saturated with the adhesive.

8. Use according to any of the preceding claims, **characterized in that** the heat-activatable adhesive is an adhesive based on one or more thermoplastic polymers.

9. Use according to any of the preceding claims for adhesively bonding in the area of communications electronics and/or entertainment electronics.


**Revendications**

1. Utilisation d'une feuille adhésive, comprenant un support non tissé et deux couches en matières adhésives thermoactivables agencées des deux côtés du support non tissé,
les deux matières adhésives étant infiltrées dans le support non tissé de manière à ce qu'au total entre 20 % et 92 % du volume se trouvant entre les fibres du support non tissé dans le composite de feuille adhésive soit imprégné avec la matière adhésive, à condition que les matières adhésives infiltrées des deux côtés du support non tissé constituent chacune au moins 10 % du volume se trouvant entre les fibres du support non tissé dans le composite, pour le collage de composants d'appareils électroniques, un métal étant collé avec un plastique, un verre ou un métal.

2. Utilisation selon la revendication 1, **caractérisée en ce qu'**au total entre 40 % et 80 du volume se trouvant entre les fibres du support non tissé dans la feuille adhésive est imprégné avec la matière adhésive.

3. Utilisation selon la revendication 1, **caractérisée en ce que** les matières adhésives infiltrées des deux côtés du support non tissé constituent chacune au moins 20 % du volume se trouvant entre les fibres du support non tissé dans le composite.

4. Utilisation selon l'une quelconque des revendications précédentes, **caractérisée en ce que** les matières adhésives des deux côtés du support non tissé sont identiques.

5. Utilisation selon l'une quelconque des revendications précédentes, **caractérisée en ce que** les matières adhésives infiltrées des deux côtés du support non tissé constituent chacune une proportion identique du volume se trouvant entre les fibres du support non tissé dans le composite.

6. Utilisation d'une feuille adhésive comprenant un support non tissé et deux couches en matières adhésives thermoactivables agencées des deux côtés du support non tissé,
les deux matières adhésives étant infiltrées dans le support non tissé de manière à ce qu'au total entre 20 % et 92 % de l'épaisseur de couche du support non tissé soit imprégné avec la matière adhésive, à condition qu'à chaque fois au moins 10 % de l'épaisseur du support non tissé soit imprégnée des deux côtés du support non tissé, pour le collage de composants d'appareils électroniques, un métal étant collé avec un plastique, un verre ou un métal.

7. Utilisation selon la revendication 5, **caractérisée en ce qu'**au total entre 40 % et 80 %, de préférence entre 50 % et 75 %, de l'épaisseur de couche du support non tissé est imprégnée avec la matière adhésive.

8. Utilisation selon l'une quelconque des revendications précédentes, **caractérisée en ce que** la matière adhésive thermoactivable est à base d'un ou de plusieurs polymères thermoplastiques.

9. Utilisation selon l'une quelconque des revendications précédentes pour le collage dans le domaine de l'électronique des communications et/ou des divertissements.

Fig. 1

Fig. 2

**Fig. 3a**

**Fig. 3b**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

• **VON DONATAS SATAS.** Handbook of Pressure Sensitive Adhesive Technology. van Nostrand, 1989